(19) Europäisches Patentamt / European Patent Office / Office européen des brevets

(11) **EP 3 188 092 A1**

(12) **EUROPEAN PATENT APPLICATION**

(43) Date of publication:
**05.07.2017 Bulletin 2017/27**

(51) Int Cl.:
**G06Q 10/04** *(2012.01)*    **G06Q 10/08** *(2012.01)*

(21) Application number: **16002703.3**

(22) Date of filing: **20.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.12.2015 US 201514981026**

(71) Applicant: **SAP SE**
**69190 Walldorf (DE)**

(72) Inventors:
• **ZHOU, Wenjun**
  **69190 Walldorf (DE)**
• **LI, Wen-Syan**
  **69190 Walldorf (DE)**

(74) Representative: **Müller-Boré & Partner**
**Patentanwälte PartG mbB**
**Friedenheimer Brücke 21**
**80639 München (DE)**

(54) **DATA ANALYSIS FOR SCHEDULING OPTIMIZATION WITH MULTIPLE TIME CONSTRAINTS**

(57)    A schedule optimizer accesses a demand database storing a plurality of demands for delivery, and a vehicle database to obtain vehicle data for a plurality of delivery vehicles, the vehicle data included in a vehicle data structure. The schedule optimizer further includes a demand selection data structure handler configured to provide a plurality of demand selection data structures, each demand selection data structure configured to store an optimization variable and a vehicle list representing a subset of the plurality of vehicles. The schedule optimizer iteratively selects demands from the plurality of demands, based on a time-decaying likelihood of increasing the optimization variable, to thereby form a current route schedule for the current vehicle. The schedule optimizer determines an optimized route schedule, based on the current route schedule and at least one preceding route schedule of at least one preceding iteration.

FIG.1

EP 3 188 092 A1

**Description**

**TECHNICAL FIELD**

This description relates to data analysis for predictive scheduling.

**BACKGROUND**

High volumes of data are captured, stored, and available for use in various types of decision-making. However, it is often difficult or impossible for human users of such data to interpret and apply the data, and to engineer computers to operate based on the data and in a manner that optimizes use of the available data.

Computers are often used in various types of scheduling operations, and many such scheduling operations are straightforward. In some contexts, however, it is still difficult or impossible to make large-scale, accurate, and/or timely scheduling decisions, particularly when certain scheduling constraints exist, and/or when a large number of scheduling variables are present.

For example, some scheduling data relates to scheduling operations with time constraints. In particular, scheduling shipments of fresh fruit or other spoilable goods will be subject to such time constraints. On the other hand, some goods are non-perishable and can be delivered within a much larger time window. Further, recipients of deliveries may impose additional time constraints (e.g., delivery demands). Other time constraints (e.g., loading or unloading times), as well as other types of constraints (e.g., capacity or availability constraints), also may be present.

**SUMMARY**

The present description provides data analysis to predict and control schedules of vehicles that are transporting goods in a time-constrained environment with multiple time constraints. The data analysis relies on available data characterizing the type and quantity of the goods to be delivered, as well as data characterizing orders or other (past, present, or future) requests for various quantities of the perishable goods. The data analysis also analyzes data characterizing the transport/delivery vehicles to be scheduled, a nature and extent of the time constraints associated with the perishable nature of the goods being scheduled, and other factors.

Through predictive data analysis, the above and other types of data may be used to obtain an optimized schedule. For example, an iterative, meta-heuristic algorithm may be used to input the data and provide an optimized schedule. The results may be used to determine whether to accept a shipment order, and/or may be used to control a schedule of a truck, ship, or other vehicle transporting the associated perishable goods. Moreover, such schedules can be generated on a multi-day basis, in order to schedule deliveries of goods having different time constraints (e.g., perishable and non-perishable goods). As a result, the goods may be delivered in a manner that optimizes a speed, reliability, and or profit of the transportation process.

According to one general aspect, a computer program product is tangibly embodied on a non-transitory computer-readable storage medium and includes instructions that, when executed, are configured to cause at least one computing device to access a demand database storing a plurality of demands for delivery, each demand specifying at least one item for delivery, and at least one delivery location, and access a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule. The instructions when executed, are further configured to cause at least one computing device to provide a plurality of demand selection data structures, each demand selection data structure configured to store an optimization variable and a vehicle list representing a subset of the plurality of vehicles, and execute scheduling iterations for determining an optimized route schedule for the plurality of demands and the plurality of vehicles. A current iteration includes assigning a current demand selection probability to each demand, based on a time-decaying likelihood of increasing the optimization variable, and selecting, for a current vehicle of a corresponding demand selection data structure, a demand from the demand list, based on its relative demand selection probability, for association with the current vehicle, to thereby update a current route schedule for the current vehicle. The current iteration further includes updating a current vehicle data structure for the current vehicle, including updating a current remaining capacity and the current route schedule thereof, and determining, based on at least one of the plurality of demands and the current vehicle data structure, that the plurality of demand selection data structures have each determined a corresponding route schedule. The instructions when executed, are further configured to cause at least one computing device to select the optimized route schedule from the current iteration and at least one previous iteration of the scheduling iterations, based on the optimization variable.

According to another general aspect, a method of executing instructions recorded on a non-transitory computer-readable storage medium includes accessing a demand database storing a plurality of demands for delivery, each demand specifying at least one item for delivery, and at least one delivery location, and accessing a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule. The method further includes providing a plurality of demand selection data structures, each demand selection data structure configured to store an optimization variable and a vehicle list representing a subset of the plurality of vehicles, and executing scheduling iterations for determining an optimized route schedule for the plurality of demands and the plurality of vehicles. A current iteration includes assigning a current demand selection probability to each demand, based on a time-decaying likelihood of increasing the optimization variable, and selecting, for a current vehicle of a corresponding demand selection data structure, a demand from the demand list, based on its relative demand selection probability, for association with the current vehicle, to thereby update a current route schedule for the current vehicle. The current iteration further includes updating a current vehicle data structure for the current vehicle, including updating a current remaining capacity and the current route schedule thereof, and determining, based on at least one of the plurality of demands and the current vehicle data structure, that the plurality of demand selection data structures have each determined a corresponding route schedule. The method further includes selecting the optimized route schedule from the current iteration and at least one previous iteration of the scheduling iterations, based on the optimization variable.

According to another general aspect, a system includes at least one processor, and a non-transitory computer-readable storage medium storing instructions executable by the at least one processor. The system further includes a schedule optimizer configured to cause the at least one processor to access a demand database storing a plurality of demands for delivery, each demand specifying at least one item for delivery, and at least one delivery location, and further configured to cause the at least one processor to access a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule. The schedule optimizer further includes a demand selection data structure handler configured to provide a plurality of demand selection data structures, each demand selection data structure configured to store an optimization variable and a vehicle list representing a subset of the plurality of vehicles, and an iteration controller configured to execute iterations for determining an optimized route schedule for the plurality of demands and the plurality of vehicles. The schedule optimizer further includes a demand manager configured, in each iteration, to select, for a current vehicle and its demand selection data structure, at least one demand from the plurality of demands, based on a time-decaying likelihood of increasing the optimization variable, to thereby form a current route schedule for the current vehicle. The schedule optimizer further includes a vehicle manager configured to update a current vehicle data structure for the current vehicle, including updating a current remaining capacity and the current route schedule thereof. The schedule optimizer further includes a schedule manager configured to determine an optimized route schedule, based on the current route schedule and at least one preceding route schedule of at least one preceding iteration.

The details of one or more implementations are set forth in the accompanying drawings and the description below. Other features will be apparent from the description and drawings, and from the claims.

BRIEF DESCRIPTION OF THE DRAWINGS

FIG. 1 is a block diagram of a system for multi-day delivery scheduling optimization with multiple time constraints.
FIG. 2 is a flowchart illustrating example operations of the system of FIG. 1.
FIG. 3 is an example route schedule that may be constructed using the system of FIG. 1.
FIG. 4 is a block diagram of multiple delivery locations for which delivery scheduling optimization may be performed using the system of FIG. 1.
FIG. 5 is a block diagram of the multiple delivery locations of FIG. 4, illustrating example delivery demands.
FIG. 6 is a block diagram of the multiple delivery locations of FIGS. 4 and 5, illustrating a first example route schedule for the delivery demands of FIG. 5 and constructed using the system of FIG. 1.
FIG. 7 is a block diagram of the multiple delivery locations of FIGS. 4 and 5, illustrating a second example route schedule for the delivery demands of FIG. 5 and constructed using the system of FIG. 1.
FIG. 8 is a flowchart illustrating more detailed example operations of the system of FIG. 1.

DETAILED DESCRIPTION

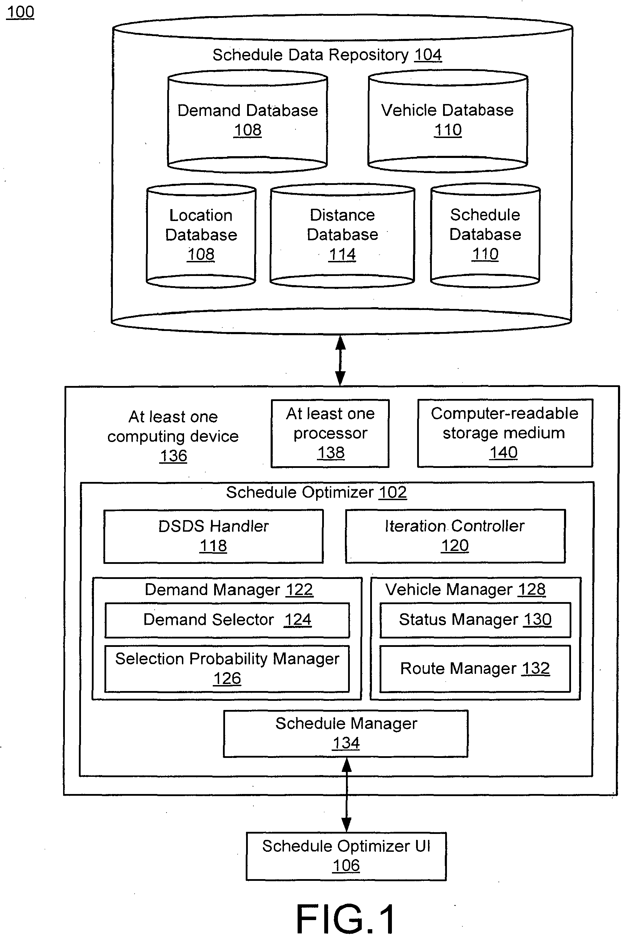

FIG. 1 is a block diagram of a system 100 for multi-day delivery scheduling optimization with multiple time constraints. In the example of FIG. 1, a schedule optimizer 102 is configured to access, analyze, and process schedule data from one or more schedule data repositories represented in the simplified example of FIG. 1 by a schedule data repository 104. Although the schedule data repository 104 may include extremely large quantities of schedule data, corresponding to an extensive solution space for schedule optimization, including time constraints and other parameters that may be in conflict with one another to some extent, the schedule optimizer 102 of FIG. 1 is configured to provide an optimized, multi-day delivery route schedule in a manner that is quick, cost-effective, dynamic, and reliable.

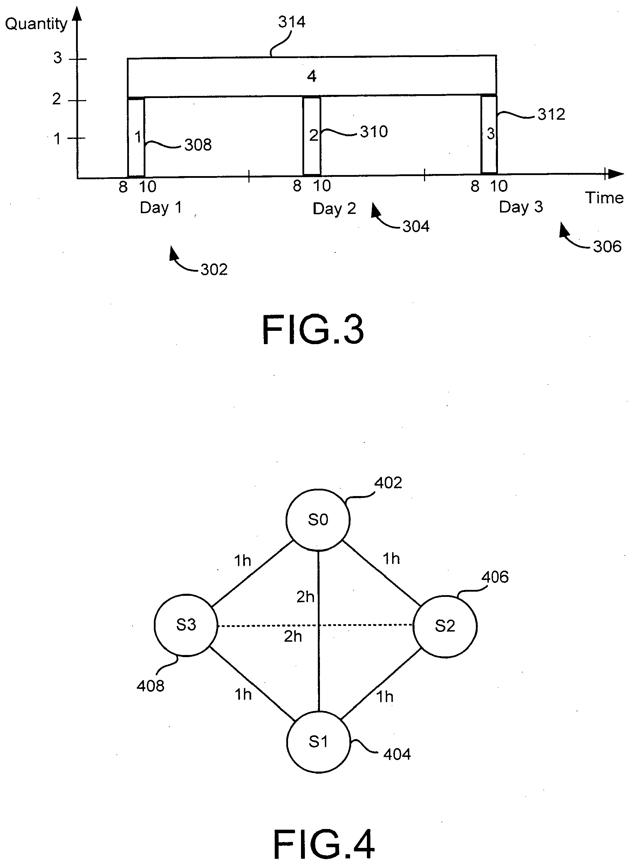

In various implementations, the schedule optimizer 102 may be configured to provide the optimized route schedule, or related information or actions, using a schedule optimization user interface (UI) 106. For example, the schedule optimization UI 106 may display optimized route schedules using a timing diagram, such as that shown and described below with respect to FIG. 3. In other examples, the schedule optimization UI 106 may be configured to illustrate the types of location maps, or similar geographical representations, shown and described below with respect to FIGS. 4-7.

In various implementations, the schedule optimization UI 106 may be configured to enable a user of the system 100 to make changes to, select between, or otherwise modify or use optimized schedules provided by the schedule optimizer 102. In additional or alternative examples, the schedule optimization UI 106 also may be configured to enable a user of the system 100 to parameterize, configure, or otherwise utilize operations of the schedule optimizer 102, examples of which are described below, or would be apparent to one of skill in the art.

In operation, the schedule data repository 104 may be configured to store virtually any type of schedule data that may be useful in operations of the schedule optimizer 102. In the example of FIG. 1, the schedule data repository 104 is illustrated as including a demand database 108 configured to store a plurality of demands for delivery. In this context, such delivery demands generally refer to any type of order, request, or transaction in which a customer or other recipient specifies parameters for a delivery to be executed. Although more detailed examples are provided below, such delivery demands will generally be understood to include, for example, an identification and quantity of items to be purchased or rented, associated prices, fees, and other costs, a delivery location at which delivery will occur, a delivery deadline or other time constraint for the delivery, a consequence for violating one or more of such time constraints, and various other demand parameters.

Meanwhile, a vehicle database 110 may be configured to store a plurality of vehicle data structures corresponding to, and characterizing, a plurality of delivery vehicles that are available for executing one or more optimized route schedules provided by the schedule optimizer 102. Examples of such delivery vehicles would be apparent, but for the sake of example and explanation, a non-limiting listing of such delivery examples include, for example, trucks, cars, trains, ships, bicycles, jets, or combinations thereof.

Further, a location database 112 may be configured to store data regarding the various potential delivery locations to be considered by the schedule optimizer 102, including, e.g., stores or other businesses, or residential locations. A distance database 114 may be configured to store distances between the various delivery locations, and other relevant information. For example, distances between the delivery locations and depots from which goods are shipped (i.e., from which delivery vehicles depart, and to which delivery vehicles return when emptied) may be stored.

Finally with respect to the schedule data repository 104, a schedule database 116 represents an example output of the schedule optimizer 102, in which route schedules are provided as ordered lists of demands associated with each delivery vehicle, and stored in conjunction with location and timing requirements, and other relevant schedule data.

In operation, as described in more detail below, the schedule optimizer 102 may be implemented by an owner or operator of the various delivery vehicles included in the vehicle database 110. In some cases, the schedule optimizer 102 may be operated by a third-party owner/operator of the various delivery vehicles being used. In other implementations, the owner/operator of the schedule optimizer 102 may be using the system 100 at a provider of the goods or other items being sold and scheduled for delivery.

With respect to FIG. 1, and in general, it will be appreciated that a collective number of deliveries, and number of different types of deliveries, continues to grow over time. Further, individual companies are experiencing similar types of growth. That is, for example, a company might be required to deliver large amounts of goods every day, subject to various properties and limitations for each delivery, such as the types of goods being delivered, the business values of the goods, the quantities of the goods, and any time constraints required. Further, in many cases, the company may be required, or may desire, to plan deliveries for multiple days in advance.

Although completing deliveries successfully helps ensure profitability and customer satisfaction, delivery scheduling is extremely complicated. Although it is possible for a human operator to manually construct a schedule in simplified scenarios, it is difficult, impractical, or impossible for human operators to manually construct feasible, much-less optimized, delivery schedules in many practical scenarios. For example, a human operator may simply not have sufficient time to construct a feasible schedule. In other scenarios, a human operator may construct a delivery schedule without realizing that the manually constructed delivery schedule violates one or more time constraints or other parameters.

Of course, such difficulties only become more extreme or insurmountable as a number of constraints and limitations are imposed. For example, such constraints may include capacity limitations of delivery vehicles, as well as various arrival time constraints. For example, for arrival time constraints, it will be appreciated that different types of goods may be associated with different time constraints. For example, fresh milk, bread, or fruit may have strict and short arrival time constraints, while other goods, such as mineral water, may be delivered within much wider time windows.

Further, even a delivery route schedule that is feasible may be insufficient or unacceptable. For example, a schedule that fulfills all constraints but requires a large delivery cost may be unacceptable.

Forecasting route schedules multiple days in advance may be theoretically helpful, e.g., with respect to incorporating deliveries that have relatively loose time constraints, (e.g., as in the mineral water example, above) with deliveries having much tighter time constraints (e.g., fresh fruit). However, corresponding increases in a solution space for a given route scheduling optimization only increases difficulties associated with managing huge quantities of data.

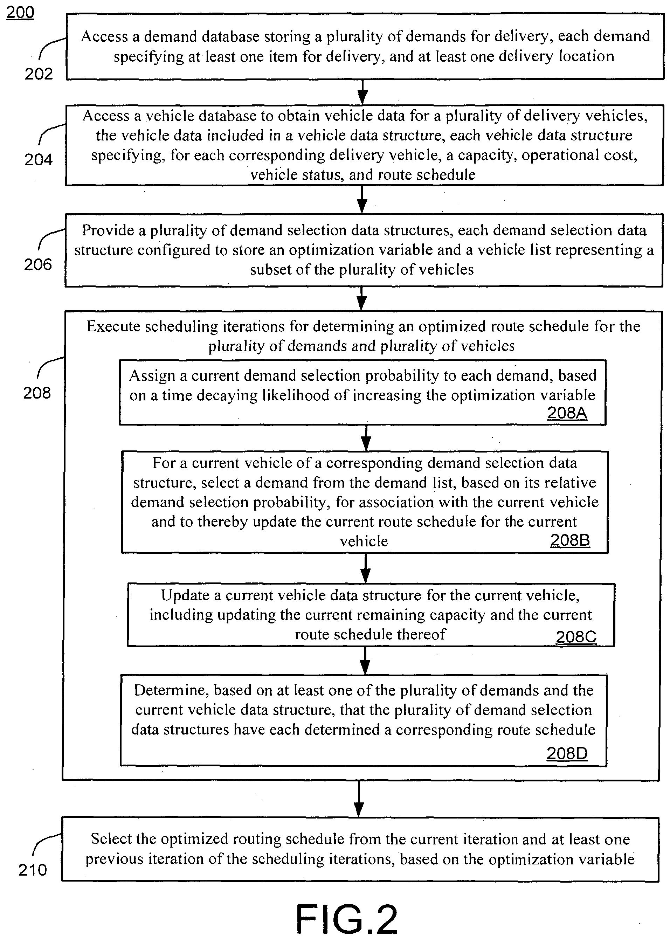

Specific examples of detailed delivery scenarios are provided below, e.g., with respect to FIGS. 3-8. For purposes of FIGS. 1 and 2, it will be appreciated that, as described above with respect to the schedule data repository 104, the schedule optimizer 102 is configured to process a large number of demands, where each demand specifies at least one item for delivery to at least one location (along with any other relevant constraints or aspects of the requested delivery), for scheduling of corresponding deliveries of the specified items using available delivery vehicles.

For purposes of FIG. 1, it is assumed that delivery vehicles in the vehicle database 110 have known capacities and delivery costs, and depart from, and return to, a known delivery depot. Similarly, demands in the demand database 108 may be associated with locations (e.g., stores, factories, or other delivery sites), where data regarding the locations may be provided within the location database 112 and/or the distance database 114. Of course, data associated with the schedule data repository 104 is not intended to exhaustive or exclusive. For example, the schedule data repository 104 may include, or access, inventory data or other data related to the items to be sold/delivered, including a cost and current availability of such inventory.

In the example of FIG. 1, the schedule optimizer 102 includes a demand selector data structure (DSDS) handler 118. In this regard, as described in detail below, a DSDS is a data structure in which one or more delivery vehicles of the delivery database 110 is included together with an optimization variable. For example, a particular DSDS may represent a data structure associated with a single vehicle and an optimization variable. Meanwhile, a second DSDS may list two (or some other number of) separate delivery vehicles, along with the optimization variable.

Then, an iteration controller 120 may be configured to oversee operations in which each DSDS has its listed delivery vehicles associated with corresponding demands from the demand database 108, with a value for each optimization variable of each DSDS being calculated at each iteration. In this way, over a number of iterations, values for the optimization variables may be increased, while nonetheless ensuring that corresponding route schedules are feasible with respect to all relevant time constraints.

By way of descriptive analogy, and as described in more detail in the following examples, operations of the schedule optimizer 102 may be compared to a manner in which many ants of an ant colony forage for food. In this analogy, the ant colony represents a delivery depot from which deliveries occur, and the delivery locations correspond to food sources discovered by the ants. Further, each DSDS corresponds to an ant, and each vehicle list of each DSDS corresponds conceptually to an ability of an ant to transport food between food sources and the ant colony.

Carrying the ant colony analogy further, it is known that ants deposit pheromones to define trails between the ant colony and each food source. The pheromones increase when ants repeatedly travel the same trail, and decay or decrease over time along a trail that is used less frequently. Then, "iterations" occur as the ants repeatedly traverse various ones of the trails, where the increased likelihood of ants traversing shorter and/or more abundant trails implies that such trails will be utilized more successfully, and more frequently.

In the example of FIG. 1, the optimization variable equates generally to food retrieved by a given ant, i.e., represents a measure of success. In the examples that follow, the optimization variable is described and implemented as a quantification of profit obtained by a corresponding route schedule. However, in additional or alternative implementations, other optimization variables may be used, such as time limits or speed of deliveries.

Also, in the example of FIG. 1, the concept of a pheromone or other attractant is represented by a demand selection probability. As described in detail below, each demand of the demand database 108 may be associated with a demand selection probability that, like the pheromone of the ant colony analogy, increases when a corresponding optimization variable increases, but decreases over time when the optimization variable remains the same or decreases. In various example implementations, various additional or alternative techniques may be utilized to calculate time varying values for the demand selection probability of each demand.

Thus, in FIG. 1, a demand manager 122 is illustrated as including a demand selector 124 and a selection probability manager 126. For example, as just referenced, and as described in detail below, the demand selector 124 may be configured to select, for each DSDS, one or more demands for associated delivery scheduling. For example, in an extremely simplified example, a first DSDS may include a value for its optimization variable and a single delivery vehicle having a known capacity and delivery cost. Meanwhile, a list of 10 demands may be available for selection, each demand being associated with at least a quantity of items to be delivered, at least one location to which delivery must occur, and any associated time constraints. Further, each demand may be associated with a demand selection probability.

In operation, then, the demand selector 124 may initially select a demand from the list of 10 demands, based on the route of demand selection probabilities, for association with the current DSDS. If the capacity of the single listed delivery vehicle is not filled by the first selected demand, the demand selector 124 may select a second demand from the list, and so on until the capacity of the delivery vehicle is filled. At that point, the delivery vehicle will be associated with an ordered list of demands and associated delivery locations, which thus represent a route schedule for the delivery vehicle in question. A value for the optimization variable of the DSDS may be updated, and selection probabilities for the remaining demands may also be updated.

In conjunction with the operations of the demand manager 122, a vehicle manager 128 may be configured to store vehicle-specific data for each delivery vehicle of the vehicle database 110, and, more specifically, may be configured to update such vehicle data in conjunction with operations of the demand manager 122 and the iteration controller 120.

For example, the vehicle manager 128 may be configured to store a vehicle data structure (VDS) for each vehicle of the vehicle database 110. As described in more detail below, each VDS may be configured to store a status of the corresponding vehicle, including a status of a capacity of the vehicle, given already-scheduled deliveries, a location of the vehicle as the vehicle is routed through the various delivery sites, and any other vehicle data that may be updated or altered over time in conjunction with operations of the iteration controller 120 and the demand manager 122. Further with respect to the vehicle manager 128, a route manager 132 may be configured to store a current ordered list of demands and associated delivery locations for a corresponding vehicle. Again, such routing information may change over time in conjunction with various iterations overseen by the iteration controller 120, until an optimized route schedule for the corresponding delivery vehicle is reached, and the route manager 132 is configured to dynamically update the corresponding VDS over time, accordingly.

Once the iteration controller 120 determines that a sufficient or a required number of iterations have been completed, or otherwise determines that the iterative process should stop, a schedule manager 134 is configured to interact with the schedule database 116 to provide the schedule optimization UI 106 and associated route schedules calculated by the schedule optimizer 102. In this regard, in some implementations, the resulting route schedule information may be presented in an otherwise conventional manner, e.g., illustrating a time of delivery and associated delivery vehicle for each delivery location. In this way, the route schedule data may be presented to a user in a known and convenient format.

Additionally, of course, the schedule optimization UI 106 may be provided using various advantageous features and functions of the schedule optimizer 102. For example, the schedule manager 134 may be configured to display two or more proposed route schedules, so that the user of the schedule optimization UI 106 may select there between. Further, as also referenced above, the schedule manager 134 and the schedule optimization UI 106 may be utilized to enable a user to configure operations of the schedule optimizer 102. For example, such configurations may include a number of iterations to be performed by the iteration controller 120, or a manner in which the demand selection probability is calculated for each demand.

In the example of FIG. 1, the schedule optimizer 102 is illustrated as being executed using at least one computing device 136. As shown, the at least one computing device 136 may include at least one processor 138, as well as a non-transitory computer readable storage medium 140. Of course, the at least one computing device 136 represents a highly simplified example intended to illustrate the transformation by the schedule optimizer 102 of a general purpose computer into a special purpose computer configured to perform the route schedule optimizations described herein. As such, the at least one computing device 136 will of course be understood to include various other hardware and/or software modules not separately or explicitly illustrated in the simplified example of FIG. 1. For example, the at least one computing device 136 may include, or be associated with, an appropriate monitor or other display for providing the schedule optimization UI 106, various input/output devices for interacting with the user of the system 100, and associated hardware/software for executing network communications.

In the latter regard, it will be appreciated that the at least one computing device 136 may represent two or more computing devices communicating over a public or private network. Accordingly, it will be appreciated that, although the schedule optimizer 102 and its various components or sub-components 118-134, are illustrated as separate, distinct components or sub-components, any such single component or sub-component may be executed as two or more sub-components, perhaps using two or more corresponding computing devices. Similarly, operations of two or more such components or sub-components may be executed in parallel using two or more processors represented by the at least one processor 138. For example, demand selection operations for two or more DSDS instances may be executed in parallel.

Further, it will be appreciated that instructions for implementation of the schedule optimizer 102 may be stored using the non-transitory computer readable storage medium 140, for execution thereof by the at least one processor 138. As referenced above, any single component or sub-component of the schedule optimizer 102 may be executed using two or more corresponding sub-components, so that instructions for each such sub-component may be stored using one or more instances of the computer readable storage medium 140. Conversely, of course, any two or more components or sub-components may be combined for operation and execution as a single component or sub-component, and, again, one or more instances of the computer readable storage medium 140 may be selected and configured for storage of all such instructions.

FIG. 2 is a flowchart 200 illustrating example operations of the system 100 of FIG. 1. In the example of FIG. 2, operations 202-208 are illustrated as separate, sequential operations. In various implementations, additional or alternative operations or sub-operations may be included, and/or one or more operations or sub-operations may be omitted, or executed in a different order than that shown. In all such implementations, it may occur that various ones of the operations or sub-operations included may be executed in a partially or completely overlapping or parallel manner, or in a nested, iterative, looped, or branched fashion.

In the example of FIG. 2, a demand database storing a plurality of demands for delivery may be accessed, each demand specifying at least one item for delivery, and at least one delivery location (202). For example, the schedule optimizer 102 may be configured to access the demand database 108. As described, the various demands also may include various other constraints or requirements, including arrival time constraints.

A vehicle database may be accessed to obtain vehicle data for a plurality of delivery vehicles, the vehicle data included in a vehicle data structure, each vehicle data structure specifying, for each corresponding delivery vehicle, a capacity, operational cost, vehicle status, and route schedule (204). For example, the schedule optimizer 102 may access the vehicle database 110. As described, data for available vehicles may be stored on a per-vehicle basis, using a vehicle data structure, or VDS.

A plurality of demand selection data structures may be provided, each demand selection data structure configured to store an optimization variable and a vehicle list representing a subset of the plurality of vehicles (206). For example, the schedule optimizer 102, e.g., the DSDS handler 118, may be configured to provide the referenced demand selection data structures, perhaps for storage using the schedule database 116. In practice, a number of vehicles provided within each vehicle list of each demand selection data structure may be configured using the schedule optimization UI 106, along with a nature and type of the optimization variable.

Scheduling iterations for determining an optimized route schedule for the plurality of demands and plurality of vehicles may be executed (208). For example, the schedule optimizer 102, e.g., the iteration controller 120, may be configured to manage operations of the demand manager 122 and the vehicle manager 128, as represented by sub-operations 208A-208D.

Specifically, as shown, in a current iteration, a current demand selection probability may be assigned to each demand, based on a time decaying likelihood of increasing the optimization variable (208A). For example, the selection probability manager 126 may calculate a demand selection probability for each demand, using the example calculation techniques described below.

For example, the demand selection data structure handler 118 may recalculate and update a current value of each optimization variable for each DSDS, based on results from a preceding iteration, and the selection probability manager 126 may utilize these values to update the corresponding time decaying likelihood for each demand for use in the current iteration. That is, as referenced above and described in detail below, each DSDS with an increased optimization variable value will generally be likely to also experience an increase in a corresponding selection probability for each associated demand, subject to various other factors described below. Conversely, optimization variables which stay the same or decrease may be likely to be associated with decreases in values of corresponding selection probabilities for associated demands.

For a current vehicle of a corresponding demand selection data structure, a demand may be selected from the demand list, based on its relative demand selection probability, for association with the current vehicle and to thereby update the current route schedule for the current vehicle (208B). For example, the demand selector 124 may select, for a current DSDS provided by the DSDS handler 118, a demand from the demand list having the highest demand selection probability, and may then assign the corresponding item for delivery and associated delivery location to a selected vehicle of the vehicle list of the current DSDS.

In other words, a current vehicle data structure for the current vehicle may be updated, including updating the current remaining capacity and the current route schedule thereof (208C). As referenced above with respect to FIG. 1, and with respect to operations 204, the vehicle manager 128 may be configured to update the route schedule and other vehicle-specific information at this point for the vehicle in question, including reducing a current available/remaining capacity of the delivery vehicle (e.g., using the status manager 130) and updating the route schedule (e.g., using the route manager 132).

Based on at least one of the plurality of demands and the current vehicle data structure, it may be determined that the plurality of demand selection data structures have each determined a corresponding route schedule (208D). For example, the demand manager 122 may determine that all capacities of all listed delivery vehicles have been filled, and/or may determine that all demand requirements of an available list of demands have been satisfied.

The optimized routing schedule may then be selected from the current iteration and at least one previous iteration of the scheduling iterations, based on the optimization variable (210). For example, the iteration controller 120 may be configured, at each iteration, to compare the current iteration with all preceding iterations, and continually select the better-available route schedule solution therefrom. Then, in practice, the iteration controller 120 may stop the iterations upon reaching a pre-defined threshold condition. For example, the iteration controller 120 may cease iterating after a pre-defined number of iterations, or after a pre-defined number of iterations at which the optimization variable values maintain a pre-defined level of consistency.

Of course, FIG. 2 represents a simplified version of the various types of implementations that may be executed using the system 100 of FIG. 1. Further examples of more detailed implementations are provided below, with respect to FIGS. 3-8.

FIG. 3 is a timing diagram illustrating a potential route schedule in a delivery scenario with multiple arrival time constraints. Specifically, as shown, a first day 302, a second day 304, and a third day 306 are illustrated. It is assumed that four different delivery demands are present. In the example, a first demand 308 has an arrival time constraint specifying a time window between 8:00 a.m. and 10:00 a.m. on the first day 302. A second demand 310 has an arrival time constraint specifying a time window between 8:00 a.m. and 10:00 a.m. on the second day 304.

A third demand 312 has an arrival time constraint specifying a time window for arrival between 8:00 a.m. and 10:00 a.m. on the third day 306. For example, as referenced above, fresh food or other perishable items may require such relatively small time windows for delivery. Meanwhile, a fourth demand 314 has an arrival time constraint specifying a time window for arrival between 8:00 a.m. on the first day 302 and 10:00 a.m. on the third day 312. In other words, for example, the items to be delivered, such as mineral water, may be delivered in advance, or any time during the relatively long time window. Thus, FIG. 3 illustrates a simplified example in which a combination of different arrival time constraints enables multi-day delivery scheduling, and otherwise enlarges a possible solution space for optimizing route schedules.

FIG. 4 is a block diagram of a simplified map of various locations related to an example delivery optimization. As shown, a plurality of locations 402, 406, 404, 408 are illustrated as being separated by the provided distances/travel times. For example, the node 402, illustrated as S0, may represent a delivery depot from which delivery vehicles depart, and to which delivery vehicles return. Meanwhile, the nodes 404, 406, 408, illustrated as S1, S2, S3, respectively, may represent stores or other delivery locations to which items may be scheduled for delivery.

Even in the simplified example of FIG. 4, it may be observed that a route taken by a given delivery vehicle may have a significant impact on an associated time and cost. For example, if a delivery vehicle takes the route S0-S1-S2-S3-S0, then six hours are required for the delivery period. On the other hand, a route of S0-S2-S1-S3-S0 requires only four hours, and is thus a significant improvement over the first route, even though all of the locations 404-408 are reached in either scenario.

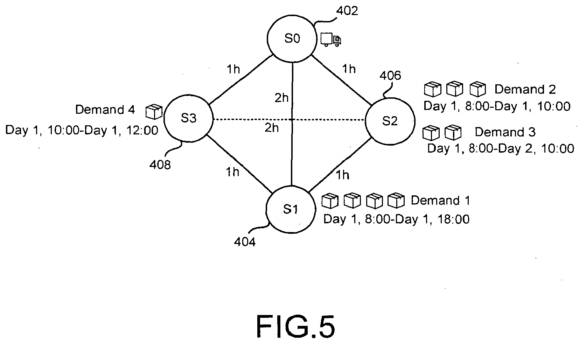

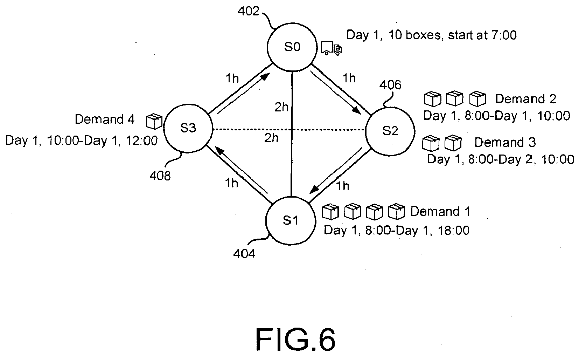

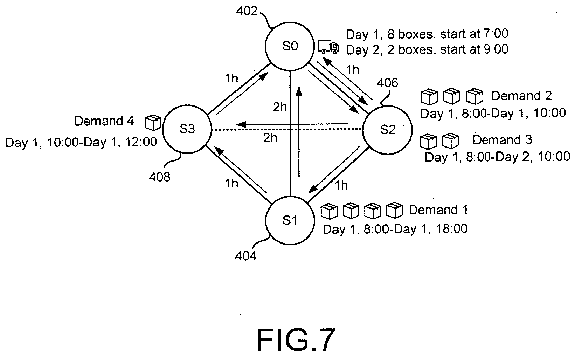

FIGS. 5-7 are block diagrams of a more detailed example scenario corresponding to the example of FIG. 4. More specifically, FIG. 5 and Table 1, below, provide a number of demands and associated constraints. FIG. 6 represents one solution for the scenario of FIG. 5 and Table 1, while FIG. 7 provides another solution for the same scenario. In other words, for example, FIG. 6 might represent a route schedule generated by the schedule optimizer 102 in one iteration, while FIG. 7 represents another route schedule generated by the schedule optimizer 102 in another iteration.

Table 1

| Demand ID | Store ID | Quantity | Start day | Start time | End day | End time |
|---|---|---|---|---|---|---|
| 1 | 1 | 4 | 1 | 8 | 1 | 18 |
| 2 | 2 | 3 | 1 | 8 | 1 | 10 |
| 3 | 2 | 2 | 1 | 8 | 2 | 10 |
| 4 | 3 | 1 | 1 | 10 | 1 | 12 |

As just referenced, Table 1 illustrates a scenario in which four demands, having corresponding unique demand identifiers, are stored within a database corresponding to the demand database 108. As shown in Table 1, the demand database 108 may store, for each demand, a corresponding store identifier for the delivery location corresponding to the demand, as well as a quantity of the items being delivered. As also shown, each demand is associated with a start time and an end time. As illustrated, FIG. 5 corresponds to Table 1, and demonstrates, for each store/location, a corresponding demand, quantity, and start/end time.

In the simplified examples of the solutions of FIGS. 6 and 7, it is assumed that only one delivery vehicle is available, and that the delivery vehicle has a capacity of 10 boxes. Then, FIG. 6 illustrates a first solution in which a route schedule specifies that, at day one, the delivery vehicle carries 10 boxes, starts at 7:00 a.m., and makes deliveries in a demand order of 2, 3, 1,4. Thus, as illustrated, the solution of FIG. 6 requires four hours.

On the other hand, with respect to FIG. 7, the demand order is specified as carrying eight boxes on day one, starting at 7:00 a.m., and delivering demands 2, 4, and 1. Further in FIG. 7, on a second day of delivery, two boxes are delivered, starting at 9:00 a.m., and delivering demand number 3. As may be observed from FIG. 7, the solution of that figure requires eight hours, while requiring two days instead of one. Consequently, it may be observed that, even for the same set of demands, time constraints, and delivery vehicles, the solution of FIG. 6 is approximately half as expense as the solution of FIG. 7, even though both solutions succeed in executing all required deliveries and meeting all required time constraints.

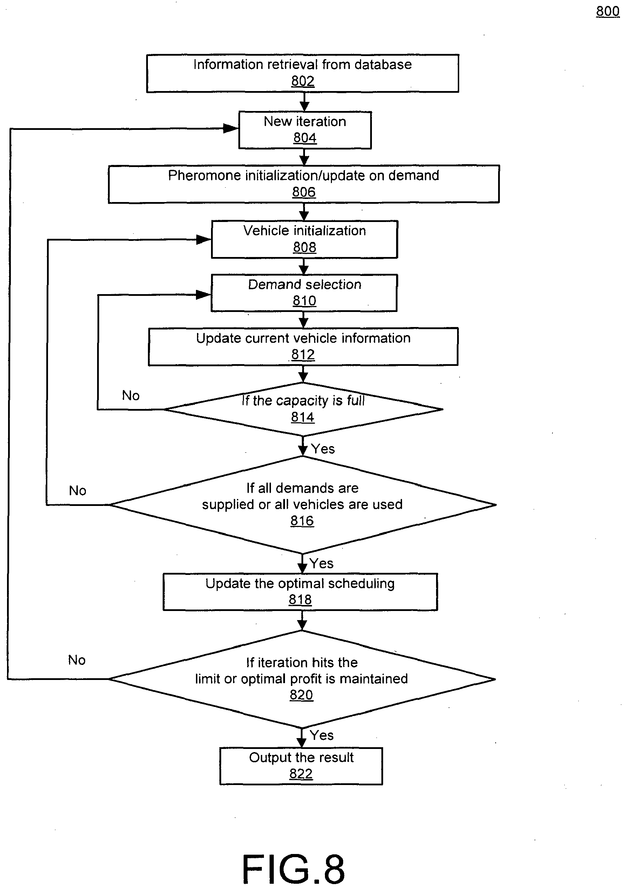

FIG. 8 is a flowchart 800 illustrating more detailed example operations of the system 100 of FIG. 1. In the example of FIG. 8, description is provided using the notation illustrated in table 2, below:

Table 2

| Notation | Description |
|---|---|
| $S_0$ | Depot |
| $S_i$ | Store $i$ <br> $i = 1, 2, ..., N$ |
| $D_j$ | Demand $j$ <br> $j = 1, 2, ..., M$ |
| $St_j$ | Store ID of demand $j$ |
| $Sd_j$ | Start day of demand $j$ |
| $Sh_j$ | Start time of demand $j$ |
| $Sn_j$ | Normalized start timestamp of demand $j$ <br> $Sn_j = 24(Sd_j - 1) + Sh_j$ |
| $Ed_j$ | End day of demand $j$ |
| $Eh_j$ | End time of demand $j$ |
| $En_j$ | Normalized end timestamp of demand $j$ <br> $En_j = 24(Ed_j - 1) + Eh_j$ |
| $Q_j$ | Quantity of demand $j$ |
| $B_j$ | Business value of demand $j$ |
| $pr_j$ | Priority of demand $j$ |
| $Pu_j$ | Punishment of demand $j$ |
| $U_j$ | Unloading time of demand $j$ |
| $V_k$ | Vehicle $k$ <br> $k = 1, 2, ..., L$ |
| $Ca_k$ | Capacity of vehicle $k$ |
| $Co_k$ | Cost for vehicle $k$ driving one hour |
| $D_{ab}$ | Distance from node $i$ to node $j$ <br> $a = 1, 2, ..., N$ <br> $b = 1, 2, ..., N$ |
| $X_j$ | $j = 1, 2, ..., M$ $$X_j = \begin{cases} 1 & if\ D_j\ is\ supplied \\ 0 & otherwise \end{cases}$$ |
| $Y_{abk}$ | $a = 1, 2, ..., M$ <br> $b = 1, 2, ..., M$ <br> $k = 1, 2, ..., L$ $$Y_{abk} = \begin{cases} 1 & if\ vehicle\ k\ drives\ from\ St_a\ to\ St_b \\ 0 & otherwise \end{cases}$$ |

In the example of table 2, as already discussed above with respect to FIGS. 4-7, the various locations are represented with the symbol S, where S0 refers to the depot and $S_i$ refers to store i, where the value of i ranges from 1 to a total of N store locations.

Meanwhile, $D_j$ refers to a demand j, where the j demands range from a value of 1 to a total number of N demands. Then, a store ID for a store of demand *j* is represented as $Sd_j$. $Sd_j$ refers to a start day of the demand j, while $Sh_j$ refers to a start time/hour of the demand j. For purposes of the calculations described herein, the start day/time of the demand j can be normalized to units of hour, so that the normalized start timestamp of demand j can be written as $Sn_j$, and calculated as shown in Table 2. Similarly, an end day $Ed_j$ and end time/hour $eh_j$ may be normalized to obtain a normalized end timestamp for demand j of $en_j$. A quantity $Q_j$ refers to a quantity of the demand j (e.g., a number of items, boxes, or other shipping containers). A value $B_j$ represents a business value of the demand j, which may be represented in dollars or other appropriate currency.

A priority of demand j may be represented notationally as $Br_j$. A numeric value for priority may be assigned using any desired or appropriate priority scale.

A punishment or consequence for failure to deliver the demand j in accordance with a delivery time constraint or other constraint may be represented as $Pq_j$. An unloading time for the demand j may be represented in hours as $U_j$.

With respect to the vehicles, a vehicle k may be represented as $V_k$, for a number of vehicles ranging from k=1 to k=L. A capacity of a given vehicle k may be represented as $Ca_k$. A cost per hour for operating a given vehicle k may be represented as $Co_k$.

A distance from a first location i to a second location j may be represented as $D_{ab}$, where either of a or b may have values ranging from 1 to N.

Finally in Table 2, the values $X_j$ and $Y_{abk}$ are both binary functions used to indicate whether a particular event happens or not. As shown, $X_j$ is such a success/failure function in which, for a given demand j, $X_j$ takes a value of 1 if the corresponding demand $D_j$ is applied, or otherwise takes a value of 0. Somewhat similarly, for any vehicles k travelling between any of the distances separating any of the pairs of locations ab, a value of $Y_{abk}$ will be 1 if the corresponding vehicle k drives from $St_a$ to $St_b$, and will otherwise have a value of 0.

In the example of FIG. 8, Equation 1, below, represents an objective function for maximizing profit when generating optimized route schedules. In other words, Equation 1 is associated with the above-referenced optimization variable associated with each DSDS, and used as a criteria for selecting between different route schedules generated in different iterations of the system 100 in implementing the flowchart 800 of FIG. 8.

$$Max\left(\sum_{j=1}^{M}(B_jX_j - Pu_j(1-X_j)) - \sum_{a=0}^{M}\sum_{b=0}^{M}\sum_{k=1}^{L}D_{St_aSt_b}Co_k Y_{abk}\right)$$

Equation 1

As shown in Equation 1, above, for M demands and L vehicles, the objective function of Equation 1 may be expressed with a summation $\sum_{j=1}^{M}B_jX_j$ representing a business value (e.g., gross income from consummated sales of delivered items). That is, as may be understood from the above description, the value $B_j X_j$ will be = to $B_j$ when $X_j$ = 1, or 0 when $X_j$ = 0. A second summation $\sum_{j=1}^{M} -Pu_j(1-X_j)$ represents a value of a punishment or consequence $Pu_j$ that is invoked when a delivery fails (e.g., is not delivered, or is late). Again, when the value $X_j$ is 1 (i.e., when delivery is successful), then the value of the second summation for that term will be 0. On the other hand, when the value $X_j$ is 0 due to a failed delivery, then the value of the second summation will be $Pu_j$ for the delivery j in question.

Finally in Equation 1, a third summation $\sum_{a=0}^{M}\sum_{b=0}^{M}\sum_{k=1}^{L}D_{St_aSt_b}Co_k Y_{abk}$ represents a cost incurred for each delivery. For example, as shown, the cost will be a function of the cost per hour, as well as the distance travelled by a given vehicle and for a corresponding pair of demands. As also referenced above, the value $Y_{abk}$ will be 1 when the corresponding distance ab is traveled by the corresponding vehicle k, or 0 when such a distance/vehicle is not present.

Thus, Equation 1 includes an expression for a profit for each route schedule, so that each DSDS, associated vehicle list, and associated route schedule will have an optimized or maximized profit. In this regard, it will be appreciated that the term optimized does not necessarily refer to a single, literal, or actual optimum (i.e., single best) value. Instead, it will be appreciated that optimization in this context refers to the process of increasing the value of the optimization variable in a direction of a maximum or most-preferred value, whether that value is ultimately reached in a given solution or after a given number of iterations, or not.

Table 3 illustrates an example format for the location database 112 of FIG. 1. Thus shown, locations in the example of table 3 in FIG. 8 correspond to individual stores, and include the depot, as well. As also shown, each store may be provided with a unique ID and store name.

Table 3

| Column name | Description |
|---|---|
| Store ID | Identity of store, starting from 1, 0 for the depot |
| Store name | Name of store |

In Table 4, an example format for storing data within the demand database 108 is provided. As shown, Table 4 includes rows for each of the various characteristics and properties of individual demands, already referenced above. For example, the demand table of table 4 includes an identity/location of the associated store for a given demand, as well as demand start/end times, demand quantities, demand business values, demand priority levels, punishments or consequences for failing in executing the demand, and a time needed for unloading items delivered in conjunction with the demand.

Table 4

| Column name | Description |
|---|---|
| Store ID | Identity of store, the location of demand |
| Demand start day | Start day of demand |
| Demand start time | Start time of demand |
| Demand end day | End day of demand |
| Demand end time | End time of demand |
| Demand quantity | Number of boxes for goods |
| Business value | Business value of demand |
| Priority | Priority of demand |
| Punishment | Punishment if the demand is not supplied |
| Unloading time | Time needed for unloading |

Table 5 illustrates an example format for a data table that may be included within the vehicle database 110. As shown, The table 5 may include an individual vehicle identifier for each vehicle, together with a capacity of each vehicle, and per hour driving cost.

Table 5

| Column name | Description |
|---|---|
| Vehicle ID | Identity of vehicle |
| Capacity | Number of boxes can be placed simultaneously |
| Cost | Cost of driving one hour |

Table 6 illustrates an example format for the distance database 114 of FIG. 1. As shown in Table 6, and referenced above, each node may be connected with one or more other nodes, and stored in conjunction with distances there between.

Table 6

| Column name | Description |
|---|---|
| Node A | Depot/Store ID |
| Node B | Depot/Store ID |
| Distance | Time needed from node A to node B |

Table 7 illustrates an example format for the schedule database 116. As shown, table 7 illustrates results of the vehicle routing optimization operations of the system 100 of FIG. 1 and the flowchart 800 of FIG. 8. As shown, table 7 includes a vehicle identifier for each vehicle, a day of delivery for a given route schedule, a start time at which a corresponding vehicle departs the depot, and a route schedule provided as an ordered list of demand IDs.

Table 7

| Column name | Description |
|---|---|
| Vehicle ID | Identity of vehicle |
| Day | Delivery day |
| Start time | Time starting from the depot |
| Route | Order of demand IDs |

In the example of FIG. 8, the process begins with retrieval of required data from the various databases (802). For example, relevant data may be retrieved from the demand database 108, the vehicle database 110, the location database 112, and the distance database 114.

At the beginning of a new iteration (804), an initialization of a demand selection probability value for each demand $D_j$ may be performed (806). That is, at a time t=0, a value of the demand selection probability $\tau_j(0)$ may initially be set to the business value $B_j$ for that demand. In other words, the demands may initially be ordered based on their respective, relative business values. As described above, the demand selection probability is a time-varying function corresponding conceptually to a deposited pheromone in the ant colony analogy. In subsequent iterations, the demand selection probability $\tau$ will be updated accordingly from its initial value, as described in detail, below.

Then, each DSDS and its associated vehicle list may be initialized (808). For example, a number R of the DSDS data structures may be initialized, each with a variable 'profit' as the optimization variable, and each with a vehicle list

VList = [$V_1$, $V_2$, ... , $V_L$], in a descending order of $\frac{Ca_k}{Co_k}, k = 1,2, ..., L.$ That is, the ratio of capacity to cost for each vehicle may be used to order the vehicles, so that higher-capacity and lower-cost vehicles will be more likely to be earlier in the list(s).

Also, each vehicle $V_k$ in VList, i.e., VList[k], is stored with a number of related data structures to represent its current status. For example, such data structures may include $Cal_k$ (a remaining capacity of $V_k$); $Day_k$ (a current day for $V_k$); $Time_k$ (a current time for $V_k$); $Tn_k$ (a normalized current timestamp for $V_k$), defined as $Tn_k = 24(Day_k - 1) + Time_k$; $Route_k$ (a current route of $V_k$, i.e. the ordered demand list); $Index_k$ (a current index of $Route_k$, also written as $Route_k[Index_k]$, representing the latest demand ID supplied by $V_k$). A final example data structure is $RList_k$, which represents a route list of $V_k$, and stores each route of $V_k$ with a corresponding day and start time. Each element in $RList_k$ is a tuple < *Day, StartTime, Route* > which is corresponding to the output data.

Finally in conjunction with the initialization, the index $k$ of *VList, k* = 1 is initialized, meaning that in the first instance, only the first element $V_1$, i.e., *VList*[1] is considered. The data structure of $V_k$ is initialized, so that $Cal_k = Ca_k$, $Day_k = 1$, $Time_k = 0$, $Tn_k = 0$, and $Index_k = 0$

In the example of FIG. 8, each DSDS executes demand selection of available demands (810), based on the above and using Equation 2:

$$P_j(t) = \begin{cases} \dfrac{\tau_j(t)^\alpha \eta_j(t)^\beta \rho_j(t)^\gamma \sigma_j(t)^\delta \varphi_j(t)^\varepsilon \omega_j(t)^\theta}{\sum \tau_l(t)^\alpha \eta_l(t)^\beta \rho_l(t)^\gamma \sigma_l(t)^\delta \varphi_l(t)^\varepsilon \omega_l(t)^\theta} & l \in allowed \\ 0 & otherwise \end{cases}$$

Equation 2

In Equation 2, $P_j$ refers to the probability for the ant to choose $D_j$, and $\tau_j$, as already referenced, refers to the pheromone on $D_j$ in the ant colony analogy, and representing the time-decaying likelihood of increasing the optimization variable. In other words, as described, the demand selection probability depends on the time-decaying likelihood, and also may depend on various additional or alternative factors, as well.

For example, in Equation 2, $\eta_j = \dfrac{1}{D_{St_{Route_k[Index_k]}St_j}}$, , i.e., a reciprocal of the distance between the store of the latest fulfilled demand in the current route of *VList[k]* and $St_j$. Meanwhile, $\rho_j = \dfrac{1}{En_j - Tn_k}$, i.e., a reciprocal of the time left for $D_j$ to be fulfilled.

Further in Equation 2, $\sigma_j = D_{St_{Route_k[Index_k]}0} + D_{0St_j} - D_{St_{Route_k[Index_k]}St_j}$ may be regarded as a potential cost saving. That is, $D_{St_{Route_k[Index_k]}0}$ refers to a distance from the store of the latest fulfilled demand to the depot. $D_{0St_j}$ refers to the distance from the depot to the store of $D_j$. $D_{St_{Route_k[Index_k]}St_j}$ refers to the distance between the store of the latest fulfilled demand to $St_j$.

Still further, $\varphi_j = Pu_j$, that is, the punishment or consequence for not meeting the delivery demand requirements (e.g., delivery deadline). $\omega_j = \dfrac{1}{U_j}$ refers to the reciprocal of unloading time $U_j$. In Equation 2, $\alpha, \beta, \gamma, \delta, \varepsilon, \theta$ refer to example weight coefficients. Finally in Equation 2, the definition of allowed can be provided as shown in Equation 3:

$$allowed = \left\{ D_l \middle| Q_l \le Cal_k, Sn_l \le Tn_k + D_{St_{Route_k[Index_k]}St_l} \le En_l \right\} \text{Equation 3}$$

That is, the quantity of goods must be less than the capacity of the vehicle in question, and the scheduled delivery must be scheduled between the start and end times Sn and En.

Once demand selection has occurred, the relevant vehicle list $V_k$ may be updated (812). For example, the capacity may be updated as $Cal_k = Cal_k - Q_j$, and the current time is set using $Tn_k = Tn_k + D_{St_{Route_k[Index_k]}St_j} + U_j$. The route index is updated for the vehicle to the current demand number j, i.e., $Route_k[Index_k] = j$, and the index is incremented, i.e., $Index_k = Index_k + 1$.

If the capacity of the current vehicle is not filled (814), then the next demand may be selected (810). This process continues; if a current vehicle $V_k$ is filled but other vehicles remain, then $V_k$ is updated to return to the depot, and its data structure is updated accordingly. Specifically, the current route for the vehicle $V_k$ is added to $RList_k$, its capacity is reset, $Cal_k = Ca_k$, its current time is reset, $Tn_k = Tn_k + D_{St_{Route_k[Index_k]}0}$, and its index is re-set to zero, $Index_k = 0$. If more demands remain with more time available for deliveries to continue, the vehicle may be used again in the same manner described above, e.g., added to the vehicle list based on its capacity/cost ratio.

That is, as long as all demands are not yet filled, and all vehicles have not yet been used (816), then a next vehicle in the list may be selected and initialized, as described. Otherwise, if the demands are all filled or all vehicles are used (e.g., all $D_j$ are supplied or *allowed* = Ø, k = L), then the optimized route scheduling may be updated (818). When each DSDS reaches this operation, the current time is incremented, t = t + 1.

Then, the time-decaying likelihood, e.g., pheromone, may be updated as part of the optimization process. For example, for all demands $D_j$, j = 1,2,..., M, the current value for the time-decaying likelihood τ (analogous to the pheromone) may be updated according to Equation 4:

$$\tau_j(t) = (1 - \mu)\tau_j(t - 1)$$

Equation 4

Each DSDS (e.g., 'ant') adds value to the time-decaying likelihood (e.g., 'pheremone') to corresponding $D_j$ according to Equations 5, 6, and 7, in which $\Delta\tau_j^r$ refers to the released pheromone from ant *r* on $D_j$ during *t* - 1 and *t*.

$$\tau_j(t) = \tau_j(t) + \Delta\tau_j$$

Equation 5

$$\Delta\tau_j = \sum_{r=1}^{R} \Delta\tau_j^r$$

Equation 6

$$\Delta\tau_j^r = \begin{cases} \dfrac{Profit_r}{W} & if\ ant\ r\ visited\ D_j\ at\ t-1 \\ 0 & otherwise \end{cases}$$

Equation 7

*Max(Profit$_r$, r = 1,2,..., R)* may then be selected as the current optimal scheduling solution. If the current profit is larger than the previous iteration, then the current, corresponding route schedule will replace the previously-stored maximum profit value from a preceding iteration.

If a maximum-assigned number of iterations is reached, or if a given profit level is maintained for a specified number of iterations, then the best route schedule obtained so far will be maintained as the optimized solution (820), and the resulting route schedule will be output (822). Otherwise, the process continues until one of the termination conditions is met.

The following pseudocode provides an example pseudocode for implementing the system 100 of FIG. 1 according to the example of FIG. 8.

```
Function optimizeScheduling(Stores, Demands, Vehicles, Distances):
% Input:  Stores - Set of stores
         Demands – Set of demands with properties
         Vehicles – Set of vehicles with capacity and cost
         Distances – Set of distances between stores
% Output: Scheduling – Multi-day scheduling of delivery
  t = 0;
  While t < iteration number
     Update pheromone on demands
     Initialize vehicle list
   For each vehicle in vehicle list
```

```
            Initialize current vehicle
        While left capacity > 0
            Select demand
            Update the status of current vehicle
        End while
    If left demands = 0
        Continue;
    End if
        Select next vehicle
    End for
    Update the optimal scheduling
    If optimal scheduling keeps for N iterations
        Break;
    End if
    t = t + 1;
    End while
    Return Scheduling.
```

Pseudocode 1

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

**Claims**

1. A computer program product, the computer program product being tangibly embodied on a non-transitory computer-readable storage medium and comprising instructions that, when executed, are configured to cause at least one computing device to:

   access a demand database storing a plurality of demands for delivery, each demand specifying at least one item for delivery, and at least one delivery location;
   access a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule;
   provide a plurality of demand selection data structures, each demand selection data structure configured to store an optimization variable and a vehicle list representing a subset of the plurality of vehicles;
   execute scheduling iterations for determining an optimized route schedule for the plurality of demands and the plurality of vehicles, in which a current iteration includes

   assigning a current demand selection probability to each demand, based on a time-decaying likelihood of increasing the optimization variable,
   selecting, for a current vehicle of a corresponding demand selection data structure, a demand from the demand list, based on its relative demand selection probability, for association with the current vehicle, to thereby update a current route schedule for the current vehicle;
   updating a current vehicle data structure for the current vehicle, including updating a current remaining capacity and the current route schedule thereof,
   determining, based on at least one of the plurality of demands and the current vehicle data structure, that the plurality of demand selection data structures have each determined a corresponding route schedule; and

   select the optimized route schedule from the current iteration and at least one previous iteration of the scheduling iterations, based on the optimization variable.

2. The computer program product of claim 1, wherein the instructions, when executed by the at least one computing device, are further configured to update the time decaying likelihood for each demand for use in assigning the current demand selection probability to each demand, based on a preceding value of the optimization variable from a preceding iteration, and/or
   wherein the instructions, when executed by the at least one computing device, are further configured to update the current vehicle data structure including determining that all capacities of all listed delivery vehicles have been filled.

3. The computer program product of claim 1 or 2, wherein the optimization variable represents, for its corresponding demand selection data structure, a profit predicted to be obtained in conjunction with successful completion of each demand by each corresponding delivery vehicle of the corresponding route schedule.

4. The computer program product of any one of the preceding claims, wherein the current route schedule includes a current day of a multi-day route schedule, and further wherein the instructions, when executed by the at least one computing device, are further configured to:

   update the current vehicle data structure including updating the current day of the multi-day route schedule.

5. The computer program product of any one of the preceding claims, wherein the instructions, when executed by the at least one computing device, are further configured to
   execute the scheduling iterations, in which the assigning the current demand selection probability for each demand is based on a distance between a delivery location most-recently assigned to the current route schedule and each remaining delivery location,
   wherein, optionally, the current remaining capacity of the current vehicle may be determined to be too small for additional deliveries and where the instructions, when executed by the at least one computing device, are further configured to

schedule a next location for the current route schedule for the current vehicle to include a depot from which the current vehicle departed for deliveries.

6. The computer program product of any one of the preceding claims, wherein the instructions, when executed by the at least one computing device, are further configured

to determine that, for a corresponding demand selection data structure, all associated demands have been assigned to the corresponding route schedule, and/or

to select the current vehicle of the corresponding demand selection data structure based on its ratio of capacity to operational cost, relative to other vehicles of the vehicle list.

7. A method of executing instructions recorded on a non-transitory computer-readable storage medium, the method comprising:

accessing a demand database storing a plurality of demands for delivery, each demand specifying at least one item for delivery, and at least one delivery location;

accessing a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule;

providing a plurality of demand selection data structures, each demand selection data structure configured to store an optimization variable and a vehicle list representing a subset of the plurality of vehicles;

executing scheduling iterations for determining an optimized route schedule for the plurality of demands and the plurality of vehicles, in which a current iteration includes

assigning a current demand selection probability to each demand, based on a time-decaying likelihood of increasing the optimization variable,

selecting, for a current vehicle of a corresponding demand selection data structure, a demand from the demand list, based on its relative demand selection probability, for association with the current vehicle, to thereby update a current route schedule for the current vehicle;

updating a current vehicle data structure for the current vehicle, including updating a current remaining capacity and the current route schedule thereof,

determining, based on at least one of the plurality of demands and the current vehicle data structure, that the plurality of demand selection data structures have each determined a corresponding route schedule; and

selecting the optimized route schedule from the current iteration and at least one previous iteration of the scheduling iterations, based on the optimization variable.

8. The method of claim 7, further comprising updating the time decaying likelihood for each demand for use in assigning the current demand selection probability to each demand, based on a preceding value of the optimization variable from a preceding iteration.

9. The method of claim 7 or 8, wherein the optimization variable represents, for its corresponding demand selection data structure, a profit predicted to be obtained in conjunction with successful completion of each demand by each corresponding delivery vehicle of the corresponding route schedule.

10. A system comprising:

at least one processor; and

a non-transitory computer-readable storage medium storing instructions executable by the at least one processor, the system further including

a schedule optimizer configured to cause the at least one processor to access a demand database storing a plurality of demands for delivery, each demand specifying at least one item for delivery, and at least one delivery location, and further configured to cause the at least one processor to access a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule, wherein the schedule optimizer further includes

a demand selection data structure handler configured to provide a plurality of demand selection data structures, each demand selection data structure configured to store an optimization variable and a vehicle list representing a subset of the plurality of vehicles,

an iteration controller configured to execute iterations for determining an optimized route schedule for the plurality of demands and the plurality of vehicles,

a demand manager configured, in each iteration, to select, for a current vehicle and its demand selection data structure, at least one demand from the plurality of demands, based on a time-decaying likelihood of increasing the optimization variable, to thereby form a current route schedule for the current vehicle,

a vehicle manager configured to update a current vehicle data structure for the current vehicle, including updating a current remaining capacity and the current route schedule thereof, and

a schedule manager configured to determine an optimized route schedule, based on the current route schedule and at least one preceding route schedule of at least one preceding iteration.

11. The system of claim 10, wherein the optimization variable represents, for its corresponding demand selection data structure, a profit predicted to be obtained in conjunction with successful completion of each demand by each corresponding delivery vehicle of the corresponding route schedule, and/or

wherein the demand manager is configured to select the at least one demand based on a demand selection probability defined in terms of the time-decaying likelihood of increasing the optimization variable, and on a.time remaining before a first time constraint of a first demand is met, wherein, optionally, the demand manager may be further configured to update the time decaying likelihood for each demand for use in assigning the current demand selection probability to each demand, based on a preceding value of the optimization variable from a preceding iteration.

12. The system of claim 10 or 11, wherein the schedule manager is configured to a determine the optimized route schedule based on relative values of an optimization variable of the current iteration and of optimization variables of the at least one preceding iteration.

13. The system of any one of claims 10 to 12, wherein the schedule manager is configured to determine the optimized route schedule after reaching a termination condition for the iterations.

14. The system of any one of claims 10 to 13, wherein the demand manager is configured to select the current vehicle of the corresponding demand selection data structure based on its ratio of capacity to operational cost, relative to other vehicles of the vehicle list.

15. The system of any one of claims 10 to 14, wherein the current remaining capacity of the current vehicle is determined to be too small for additional deliveries and wherein the demand manager is configured to schedule a next location for the current route schedule for the current vehicle to include a depot from which the current vehicle departed for deliveries.

100

Schedule Data Repository 104

Demand Database
108

Vehicle Database
110

Location
Database
108

Distance
Database
114

Schedule
Database
110

At least one
computing device
136

At least one
processor
138

Computer-readable
storage medium
140

Schedule Optimizer 102

DSDS Handler
118

Iteration Controller
120

Demand Manager 122

Demand Selector 124

Selection Probability Manager
126

Vehicle Manager 128

Status Manager 130

Route Manager 132

Schedule Manager
134

Schedule Optimizer UI
106

# FIG.1

200

Access a demand database storing a plurality of demands for delivery, each demand specifying at least one item for delivery, and at least one delivery location

202

Access a vehicle database to obtain vehicle data for a plurality of delivery vehicles, the vehicle data included in a vehicle data structure, each vehicle data structure specifying, for each corresponding delivery vehicle, a capacity, operational cost, vehicle status, and route schedule

204

Provide a plurality of demand selection data structures, each demand selection data structure configured to store an optimization variable and a vehicle list representing a subset of the plurality of vehicles

206

Execute scheduling iterations for determining an optimized route schedule for the plurality of demands and plurality of vehicles

Assign a current demand selection probability to each demand, based on a time decaying likelihood of increasing the optimization variable
208A

208

For a current vehicle of a corresponding demand selection data structure, select a demand from the demand list, based on its relative demand selection probability, for association with the current vehicle and to thereby update the current route schedule for the current vehicle
208B

Update a current vehicle data structure for the current vehicle, including updating the current remaining capacity and the current route schedule thereof
208C

Determine, based on at least one of the plurality of demands and the current vehicle data structure, that the plurality of demand selection data structures have each determined a corresponding route schedule
208D

Select the optimized routing schedule from the current iteration and at least one previous iteration of the scheduling iterations, based on the optimization variable

210

# FIG.2

FIG.3

FIG.4

FIG.5

402

S0

Day 1, 10 boxes, start at 7:00

1h          1h          406

2h

Demand 4          S3                    S2          Demand 2
Day 1, 10:00-Day 1, 12:00          2h                    Day 1, 8:00-Day 1, 10:00

Demand 3
Day 1, 8:00-Day 2, 10:00

408

1h          1h

S1          Demand 1
Day 1, 8:00-Day 1, 18:00

404

FIG.6

402

SO

Day 1, 8 boxes, start at 7:00
Day 2, 2 boxes, start at 9:00

1h
1h

406

2h

Demand 4
Day 1, 10:00-Day 1, 12:00

S3

2h

S2

Demand 2
Day 1, 8:00-Day 1, 10:00

Demand 3
Day 1, 8:00-Day 2, 10:00

408

1h
1h

1h

S1

Demand 1
Day 1, 8:00-Day 1, 18:00

404

FIG.7

800

```
┌─────────────────────────────────────┐
│   Information retrieval from database │
│                 802                   │
└─────────────────────────────────────┘
                    │
                    ▼
        ┌─────────────────────┐
        │    New iteration     │
        │         804          │
        └─────────────────────┘
                    │
                    ▼
    ┌─────────────────────────────────────┐
    │ Pheromone initialization/update on   │
    │              demand                   │
    │                806                    │
    └─────────────────────────────────────┘
                    │
                    ▼
        ┌─────────────────────┐
        │ Vehicle initialization│
        │         808          │
        └─────────────────────┘
                    │
                    ▼
        ┌─────────────────────┐
        │  Demand selection    │
        │         810          │
        └─────────────────────┘
                    │
                    ▼
    ┌─────────────────────────────────────┐
    │  Update current vehicle information   │
    │                812                    │
    └─────────────────────────────────────┘
                    │
                    ▼
   No        ◇ If the capacity is full ◇
             ◇          814            ◇
                    │ Yes
                    ▼
   No    ◇ If all demands are           ◇
         ◇ supplied or all vehicles are ◇
         ◇ used        816              ◇
                    │ Yes
                    ▼
    ┌─────────────────────────────────────┐
    │    Update the optimal scheduling      │
    │                818                    │
    └─────────────────────────────────────┘
                    │
                    ▼
   No    ◇ If iteration hits the        ◇
         ◇ limit or optimal profit is   ◇
         ◇ maintained     820           ◇
                    │ Yes
                    ▼
        ┌─────────────────────┐
        │  Output the result   │
        │         822          │
        └─────────────────────┘
```

# FIG.8

25

Europäisches
Patentamt

European
Patent Office

Office européen
des brevets

# EUROPEAN SEARCH REPORT

Application Number

EP 16 00 2703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIANG ZHANG ET AL: "An Improved Ant Colony Algorithm for the Logistics Vehicle Scheduling Problem", INTELLIGENT INFORMATION TECHNOLOGY APPLICATION, 2008. IITA '08. SECOND INTERNATIONAL SYMPOSIUM ON, IEEE, PISCATAWAY, NJ, USA, 20 December 2008 (2008-12-20), pages 55-59, XP031402304, ISBN: 978-0-7695-3497-8 * the whole document * | 1-15 | INV. G06Q10/04 G06Q10/08 |
| X | GONG YANCHENG ET AL: "Improved ant colony algorithm for vehicle scheduling problems of military logistics distribution", LOGISTICS SYSTEMS AND INTELLIGENT MANAGEMENT, 2010 INTERNATIONAL CONFERENCE ON, IEEE, PISCATAWAY, NJ, USA, 9 January 2010 (2010-01-09), pages 669-673, XP031674337, ISBN: 978-1-4244-7331-1 * the whole document * | 1-15 | |
| X | US 2015/371135 A1 (SANDEEP VEDULA S [IN] ET AL) 24 December 2015 (2015-12-24) * abstract * * paragraphs [0001] - [0005] * * paragraphs [0021] - [0023] * * paragraphs [0038] - [0057] * | 1-15 | TECHNICAL FIELDS SEARCHED (IPC) G06Q |

-/--

The present search report has been drawn up for all claims

| Place of search | Date of completion of the search | Examiner |
|---|---|---|
| The Hague | 23 March 2017 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 00 2703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU B ET AL: "An improved ant colony optimization for vehicle routing problem", EUROPEAN JOURNAL OF OPERATIONAL RESEARCH, ELSEVIER, AMSTERDAM, NL, vol. 196, no. 1, 1 July 2009 (2009-07-01), pages 171-176, XP025693356, ISSN: 0377-2217, DOI: 10.1016/J.EJOR.2008.02.028 [retrieved on 2008-03-08] * the whole document * | 1-15 | |
| X | SUN YUNSHAN ET AL: "Application research of vehicle routing problem based on an improved ant colony algorithm", COMPUTER SCIENCE AND INFORMATION TECHNOLOGY (ICCSIT), 2010 3RD IEEE INTERNATIONAL CONFERENCE ON, IEEE, PISCATAWAY, NJ, USA, 9 July 2010 (2010-07-09), pages 468-472, XP031748565, ISBN: 978-1-4244-5537-9 * the whole document * | 1-15 | TECHNICAL FIELDS SEARCHED (IPC) |

The present search report has been drawn up for all claims

| Place of search | Date of completion of the search | Examiner |
|---|---|---|
| The Hague | 23 March 2017 | De Smet, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 00 2703

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2017

| Patent document cited in search report | Publication date | Patent family member(s) | Publication date |
|---|---|---|---|
| US 2015371135 A1 | 24-12-2015 | US 2015371135 A1<br>US 2016171366 A1<br>US 2017017880 A1<br>US 2017017884 A1 | 24-12-2015<br>16-06-2016<br>19-01-2017<br>19-01-2017 |

EPO FORM P0459

For more details about this annex : see Official Journal of the European Patent Office, No. 12/82